# EUROPEAN PATENT SPECIFICATION

(11) **EP 2 701 038 B1**
(45) Date of publication and mention of the grant of the patent: **05.09.2018**
(21) Application number: 12830258.5
(22) Date of filing: 12.07.2012
(51) Int. Cl.: G06F 3/023, G06F 21/31

(54) **PASSWORD INPUT METHOD AND DEVICE**
PASSWORTEINGABEVERFAHREN UND -VORRICHTUNG
PROCÉDÉ ET DISPOSITIF D'ENTRÉE DE MOT DE PASSE

(30) Priority: 06.09.2011 CN 201110261759
(43) Date of publication of application: 26.02.2014
(73) Proprietor: Tencent Technology (Shenzhen) Co., Ltd, Shenzhen, Guangdong 518057 (CN)
(72) Inventor: LUAN, Lan, Shenzhen Guangdong 518057 (CN)
(74) Representative: Gunzelmann, Rainer
(86) International application number: PCT/CN2012/078576
(87) International publication number: WO 2013/034028

(56) References cited:
- CA-A1- 2 526 818
- CN-A- 101 305 336
- JP-A- 2005 250 530
- US-A1- 2002 070 964
- US-A1- 2002 070 964
- US-A1- 2002 122 591
- US-A1- 2007 033 647

## Description

### TECHNICAL FIELD

The disclosure relates to the field of the computer technology or electronics, and in particular to a password input method and a password input device.

### BACKGROUND

When a password is inputting, in order to prevent a password input by a user from being seen by other persons to avoid theft, conventional systems are designed to display characters input by the user as special characters "*" on a display screen. However, since the input characters cannot be seen in this password input mode, if the user inputs one or two error characters during the password input process, the user cannot determine the error input character definitely and has to clear all characters and input the password once again to correct the error character.

US 2002/070964 A1 discloses a method for providing at least a portion of a disguised password in an undisguised form, wherein a program is described having a capability of displaying a single character at a time, more than one character at a time or all of otherwise disguised characters of a password in an undisguised form in response to a successful pre-password check. CA 2526818 A1 relates to a method for concealing and revealing sensitive data, especially on devices using twelve key 10 keypads.

JP 2005250530 A discloses a character input device, which displays entered characters as they are during character entry and displays them in hidden form after a desired character string entry is fixed, or in order to prevent another person's furtive glance during entry, displays characters in hidden form sequentially a fixed time after their entry and display.

US 2007/033647A1 discloses a Triple-tap password entry, in which a password is received as a sequence of characters that are each entered as one or more keypad inputs, such as with a television remote control; the keypad inputs for each of the

characters are displayed as the sequence of characters are received, and a character of the password is obscured after the character has been received such that the characters are consecutively obscured to conceal the password; a character of the password can be obscured when a subsequent character is received, or when a time duration of the character display meets and/or exceeds a time limit.

At present, in order to protect the safety of password, many websites or users often set a very long password, which includes various special characters, thus, the possibility of error input is further increased. This password input mode hiding input characters cannot make users learn error input characters effectively; once an error character is input, the user has to clear all input password characters and perform the input again, thus, the time of the user is wasted. Moreover, for mobile terminal, which already has a poor password input experience, this password input mode further reduces the usability of products or systems including input of password.

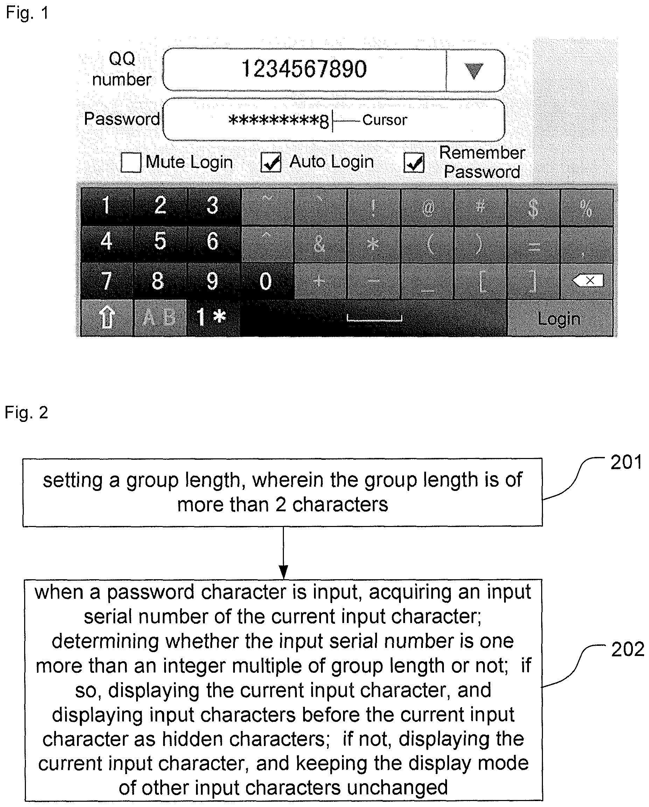

In order to overcome the above problem, another password input mode is proposed, in which, when a user inputs a character, the input character becomes a hidden character asterisk "*" automatically after waiting a short time such as 0.5 seconds, or, the previous character becomes an asterisk "*" when a next character is input. As shown in Fig. 1, the character "8" last input by a user is displayed in the input box, but all characters input before the character "8" are displayed as hidden characters "*". This method can make users learn what the current input character is; if the user finds that the current input character is an error character, he can correct it in time. However, this method still has certain drawbacks, that is, the user probably does not see the temporarily displayed character in time, or when the user inputs two or more error characters, he still cannot learn which character is the error character; therefore, this password input mode also would cause the occurrence of situation of having to clear all input password characters and perform the input once again, thus reducing the usability of products or systems including input of password.

### SUMMARY

The purpose of the embodiment of the disclosure is to provide a password input method and a password input device, so as to realize group-based password display during the password input process. The embodiment of the disclosure adopts the technical solutions as follows.

The embodiment of the disclosure provides a password input method, which includes the steps of claim 1. Preferably, the displaying the input characters before the current input character as hidden characters includes: refreshing non-hidden characters before the current input character to display them as hidden characters.

Preferably, the group length is of 3 or 4 or 5 characters.

The embodiment of the disclosure provides a password input device, which includes the features of claim 4.

The displaying unit is configured to, when displaying the input characters before the current input character as hidden characters, refresh non-hidden characters before the current input character to display them as hidden characters. Preferably, the group length is of 3 or 4 or 5 characters. Preferably, when a password character is input, an input serial number of the current input character is acquired; then, it is determined whether the input serial number is one more than an integer multiple of group length or not; if so, the current input character is displayed, and input characters before the current input character are displayed as hidden characters. Through the group display of the input password characters, users could check whether there is an error input character. Compared with the prior art, the embodiment of the disclosure greatly avoids the situation of having to clear all characters and input the password once again due to error input of characters. The manner of group-based password display during the password input process improves the usability of products or systems including input of password, and improves user experience.

In addition, since the group length is set to be of two or more characters, the user has sufficient time and information to determine where error input occurs, so as to perform correction conveniently. Moreover, when the password is relatively short, if the group length is set to be of three characters, the password information of the user can be protected while giving the user sufficient time and information to correct input error, so that an optimum balance is achieved in the two aspects. When the password is relatively long, the user also can modify the group length appropriately (for example, five characters) according to the principle of the embodiment of the disclosure, to achieve an optimum balance.

In addition, if the serial number of the last character after deleting is an integer multiple of the group length, the last string of input characters, of which the number is equal to the group length, is recovered to plaintext to be displayed, so that the user can check the previous input error one by one conveniently without deleting all input characters.

### BRIEF DESCRIPTION OF THE DRAWINGS

Fig. 1 shows a diagram of password input implementation in prior art;
Fig. 2 shows a first flowchart of a password input method in the embodiment of the disclosure;
Fig. 3 shows a second flowchart of the password input method in the embodiment of the disclosure;
Fig. 4 shows a diagram of password input implementation in the embodiment of the disclosure; and
Fig. 5 shows a structure diagram of a password input device in the embodiment of the disclosures.

### DETAILED DESCRIPTION

The embodiment of the disclosure provides a password input method and a password input device, which are applied to products or systems including input of password. Hereinafter, the embodiment of the disclosure is described in detail in conjunction with accompanying drawings.

In the embodiment of the disclosure, when a password character is input, an input serial number of the current input character is acquired; then, it is determined whether the input serial number is one more than an integer multiple of group length; if so, the current input character is displayed, and input characters before the current input character are displayed as hidden characters, wherein the group length is a preset length of two or more characters; if not, the current input character is displayed and the display mode of other input characters is kept unchanged.

Fig. 2, shows a flowchart of the password input method provided by the embodiment of the disclosure. As shown in Fig. 2, the method may include the following steps:
Step 201: Setting a group length.
Step 202: When a password character is input, acquiring an input serial number of the current input character; determining whether the input serial number is one more than an integer multiple of group length; if so, displaying the current input character, and displaying input characters before the current input character as hidden characters; if not, displaying the current input character and keeping the display mode of other input characters unchanged.

In the embodiment of the disclosure, a group length is set; when a password character is input, an input serial number of the current input character is acquired; then, it is determined whether the input serial number is one more than an integer multiple of group length; if so, the current input character is displayed, and input characters before the current input character are displayed as hidden characters. Through the group display of the input password characters, users could check whether there is an error input character. The embodiment of the disclosure greatly avoids the situation of having to clear all characters and inputting the password once again due to error input of characters. According to the password input method provided by the embodiment of the disclosure, the usability of products or systems including input of password is improved, and user experience is improved.

To describe the embodiment of the disclosure more clearly, a specific example is provided below.

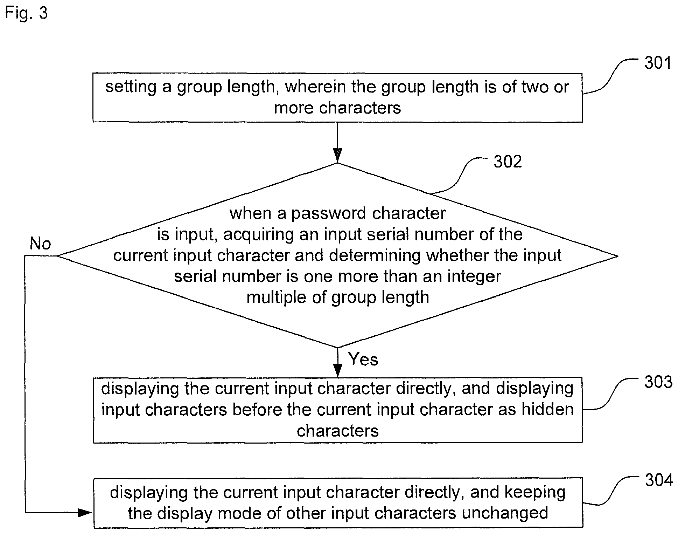

The embodiment of the disclosure provides a password input method, which, as shown in Fig. 3, includes the following steps:
Step 301: Setting a group length.

The group length can be preset by a system according to empirical values. Generally, a password has a length of 6 to 12 characters; thus, the group length can be set to be of 2, 3 or 4 characters. For some special systems, for example, the system having a password length of 20 characters, the group length can be set to be of 5 or more characters.

Step 302: When a password character is input, acquiring an input serial number of the current input character and determining whether the input serial number is one more than an integer multiple of group length; if so, executing Step 303; if not, executing Step 304.

The input serial number is the serial number of the current input character in the entire input character string, that is, the order of the current input character in the entire input character string. For example, in password "ABCDEFG", the input serial number of "G" is 7 and the input serial number of D is 4. In addition, after the seventh character is input, if the current seventh character is deleted and a next character is input, the input serial number of this next character is still 7. In the above example, if "G" in "ABCDEFG" is deleted and "H" is input to obtain ""ABCDEFH", then the serial number of "H" is still 7.

Step 303: Displaying the current input character directly, and displaying input characters before the current input character as hidden characters.

Besides displaying the current input character, it is needed to refresh the previous input characters displayed as characters to display them as hidden characters. There can be many specific refreshing methods as follows:
All input characters before the current input character can be refreshed to display as hidden characters; or a plurality of input characters before the current input character can be refreshed to display as hidden characters, wherein the number of the plurality of input characters is equal to the group length. For example, if the group length is of 3 characters, when the seventh character is input, the previous 6 input characters can be refreshed to display as hidden characters, or, the previous input characters from the fourth character to the sixth character can be refreshed to display as hidden characters.

Step 304: Displaying the current input character directly and keeping the display mode of other input characters unchanged.

Preferably, the embodiment of the disclosure can further include the following step:
after all password characters are input, displaying all input password characters when a password authentication fails, that is, recovering all input password characters to plaintext to display. Here, all input characters are displayed after the password authentication fails, so that the user can correct the error input character conveniently.

Preferably, the embodiment of the disclosure can further include:
after a password character is deleted, acquiring the input serial number of the last input character, and determining whether the input serial number is an integer multiple of the group length; if so, recovering the last string of input character, of which the number is equal to the group length, to plaintext to display; if not, keeping the display mode of other input characters unchanged.

In the embodiment of the disclosure, a group length is set; when a password character is input, an input serial number of the current input character is acquired; then, it is determined whether the input serial number is one more than an integer multiple of group length; if so, the current input character is displayed, and input characters before the current input character are displayed as hidden characters. Through the group display of the input password characters, users could check whether there is an error input character. The embodiment of the disclosure greatly avoids the situation of having to clear all characters and input the password once again due to error input of characters. Through the password input method provided by the embodiment of the disclosure, the usability of products or systems including input of password is improved, and user experience is improved. In addition, since the group length is set to be of two or more characters, the user has sufficient time and information to determine where error input occurs, so as to perform correction conveniently.

To describe the embodiment of the disclosure more clearly, a specific example is provided below.

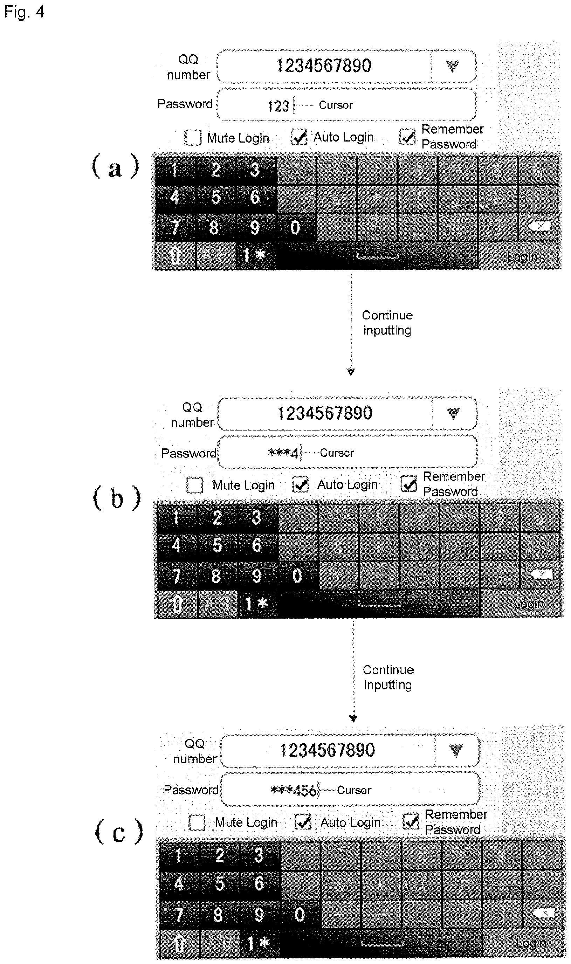

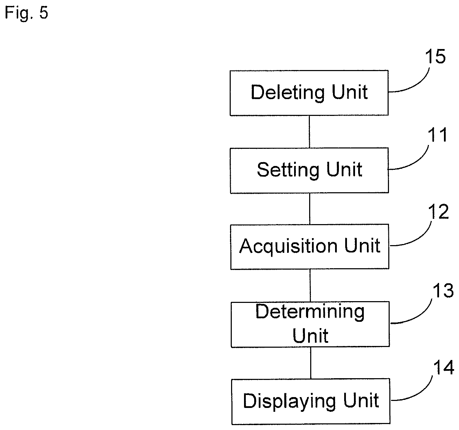

As shown in Fig. 4 (a), the group length is set to be of three characters. When a user inputs the first three input characters "123", since the input serial number of each input character is not one more than an integer multiple of group length, the input characters "123" are displayed directly. As shown in Fig. 4 (b), when the fourth character is input, at this time, since the input serial number of the fourth character is 4, which is one more than an integer multiple of group length, the current input character "4" is displayed, and the input characters before the current input character are displayed as hidden characters "*", so the password in the password box is displayed as "***4". As shown in Fig. 5 (c), when the fifth character is input, at this time, since the input serial number of the fifth character is not one more than an integer multiple of group length, the current input character is displayed directly and the display mode of other input characters is not changed; when the sixth character is input, since 6 is not one more than an integer multiple of group length either, the current input character "6" is displayed directly and the display mode of other input characters is not changed, so the password is displayed as "***456". Next, when the seventh character "7" is input, since the input serial number of the current input character is one more than an integer multiple of group length, the three characters "456" before the current input character are displayed as hidden characters, so the password is displayed as "******7". If the user continues inputting password characters, same process is conducted.

Based on the same technical concept as that of the method embodiment, the embodiment of the disclosure further provides a password input device, which can be implemented through software.

Fig. 5 shows a password input device provided by the embodiment of the disclosure. The password input device includes an acquisition unit 12, a determining unit 13 and a displaying unit 14. The password input device may further include a setting unit 11.

The setting unit 11 is configured to set a group length.

The acquisition unit 12 is configured to acquire, when a password character is input, an input serial number of the current input character.

The determining unit 13 is configured to determine whether the input serial number acquired by the acquisition unit 12 is one more than an integer multiple of group length.

The displaying unit 14 is configured to display the input characters according to a result of the determining unit 13. If the result is Yes, the displaying unit 14 is configured to display the current input character, and to display input characters before the current input character as hidden characters; if the result is No, the displaying unit 14 is configured to display the current input character, and to keep the display mode of other input characters unchanged.

In the above password input device, the displaying unit 14 is configured to refresh non-hidden characters before the current input character to display them as hidden characters when displaying the input characters before the current input character as hidden characters.

The above password input device further includes a deleting unit 15.

The deleting unit 15 is configured to: after a password character is deleted, acquire the input serial number of the last input character, and determine whether the input serial number is an integer multiple of the group length; if so, recover the last string of input characters, of which the number is equal to the group length, to plaintext to display; if not, no step is performed.

In the above device, the displaying unit 14 is further configured to, after all password characters are input and a password authentication is implemented, display all input password characters when the password authentication fails,.

In the above device, the group length is of 2 or 3 or 4 or 5 or more characters.

In the password input device provided by the embodiment of the disclosure, a group length is set; when a password character is input, an input serial number of the current input character is acquired; then, it is determined whether the input serial number is one more than an integer multiple of group length; if so, the current input character is displayed, and input characters before the current input character are displayed as hidden characters. Through the group display of the input password characters, users could check whether there is an error input character. The password input device provided by the embodiment of the disclosure greatly avoids the situation of having to clear all characters and input the password once again due to error input of characters,. Through the password input device provided by the embodiment of the disclosure, the usability of products or systems including input of password is improved, and user experience is improved. I n addition, since the group length is set to be of two or more characters, the user has sufficient time and information to determine where error input occurs, so as to perform correction conveniently

Those skilled in the art should understand that the modules included in the device provided in the embodiment can be deployed in the device provided in the embodiment according to the description of the embodiment, or can be deployed in one or more devices in different embodiments after subjecting to corresponding changes. The modules in the above embodiment can be combined into one module, or can be further divided into a plurality of submodules.

Through the description of the above embodiments, those skilled in the art can understand that the disclosure can be implemented through software plus necessary general hardware platform, and of course can be implemented through hardware; however, the former one is a better implementation in many conditions. Based on this understanding, the technical solution of the disclosure essentially or the part making a contribution to prior art can be embodied in the form of software product. This computer software product is stored in a storage medium, including a plurality of instructions used for enabling a terminal device (which can be a mobile phone, a personal computer, a server, or a network device) to execute the method described in each embodiment of the disclosure.

## Claims

1. A password input method, applied to a terminal system including input of password and comprising:
setting a group length, wherein the group length is of two or more characters;
when a password character is input, acquiring (302) an input serial number of the current input character;
comparing the input serial number with the group length and determining (302) whether the input serial number is one more than an integer multiple of a group length or not;
if so, displaying (303) the current input character as plaintext character, and displaying the input characters before the current input character as hidden characters; and
if not, displaying (304) the current input character as plain text character, and keeping a display mode of other input characters unchanged;
after a password character is deleted, acquiring an input serial number of a last input character, and determining whether the input serial number of the last input character is an integer multiple of the group length or not; if so, recovering a last string of input characters, of which the number is equal to the group length, to plaintext to display; and if not, keeping a display mode of other input characters unchanged; and
after all password characters are input, implementing a password authentication and displaying all input password characters when the password authentication fails.

2. The method according to claim 1, wherein the step of displaying the input characters before the current input character as hidden characters comprises:
refreshing all or some of non-hidden characters before the current input character to display them as hidden characters.

3. The method according to claim 1 or 2, wherein the group length is of 3 or 4 or 5 characters.

4. A password input device, applied to a terminal system including input of password and comprising:
a setting unit (11) configured to set a group length, wherein the group length is of two or more characters;
an acquisition unit (12) configured to acquire, when a password character is input, an input serial number of the current input character;
a determining unit (13) configured to compare the input serial number with the group length and determine whether the input serial number acquired by the acquisition unit (12) is one more than an integer multiple of a group length or not; and
a displaying unit (14) configured to: display the current input character as plaintext character, and display the input characters before the current input character as hidden characters when a result of the determining unit (13) is Yes; and display the current input character as plain text character, and keep a display mode of other input characters unchanged when the result of the determining unit (13) is No;
a deleting unit (15) configured to: after a password character is deleted, acquire an input serial number of a last input character, and determine whether the input serial number of the last input character is an integer multiple of the group length; if so, recover a last string of input characters, of which the number is equal to the group length, to plaintext to display; and if not, keeping a display mode of other input characters unchanged;
wherein the displaying unit (14) is further configured to, after all password characters are input and a password authentication is implemented, display all input password characters when the password authentication fails.

5. The device according to claim 4, wherein the displaying unit (14) is configured to, when displaying the input characters before the current input character as hidden characters, refresh all or some of non-hidden characters before the current input character to display them as hidden characters.

6. The device according to claim 4 or 5, wherein the group length is of 3 or 4 or 5 characters.

## Patentansprüche

1. Passworteingabeverfahren, angewandt auf ein Endgerätsystem, enthaltend Eingabe eines Passworts und umfassend:
Setzen einer Gruppenlänge, wobei die Gruppenlänge zwei oder mehr Zeichen aufweist;
wenn ein Passwortzeichen eingegeben wird, Erfassen (302) einer laufenden Eingabenummer des aktuellen Eingabezeichens;
Vergleichen der laufenden Eingabenummer mit der Gruppenlänge und Bestimmen (302), ob die laufende Eingabenummer eins mehr als ein ganzzahliges Vielfaches einer Gruppenlänge ist oder nicht;
falls ja, Anzeigen (303) des aktuellen Eingabezeichens als Klartextzeichen und Anzeigen der Eingabezeichen vor dem aktuellen Eingabezeichen als verdeckte Zeichen; und
falls nein, Anzeigen (304) des aktuellen Eingabezeichens als Klartextzeichen und unverändert Belassen einer Anzeigeart von anderen Eingabezeichen;
nachdem ein Passwortzeichen gelöscht wurde, Erfassen einer laufenden Eingabenummer eines letzten Eingabezeichens und Bestimmen, ob die laufende Eingabenummer des letzten Eingabezeichens ein ganzzahliges Vielfaches der Gruppenlänge ist oder nicht; falls ja, Wiederherstellen einer letzten Zeichenkette von Eingabezeichen, von welcher die Nummer gleich der Gruppenlänge ist, auf Klartext zum Anzeigen; und falls nein, unverändert Belassen einer Anzeigeart von anderen Eingabezeichen; und
nachdem alle Passwortzeichen eingegeben wurden, Umsetzen einer Passwortauthentifizierung und Anzeigen aller eingegebenen Passwortzeichen, wenn die Passwortauthentifizierung fehlschlägt.

2. Verfahren gemäß Anspruch 1, wobei der Schritt des Anzeigens der Eingabezeichen vor dem aktuellen Eingabezeichen als verdeckte Zeichen umfasst:
Aktualisieren aller oder mancher der nicht verdeckten Zeichen vor dem aktuellen Eingabezeichen, um sie als verdeckte Zeichen anzuzeigen.

3. Verfahren gemäß Anspruch 1 oder 2, wobei die Gruppenlänge 3 oder 4 oder 5 Zeichen aufweist.

4. Passworteingabevorrichtung, angewandt auf ein Endgerätsystem, enthaltend Eingabe eines Passworts und umfassend:
eine Festlegungseinheit (11), konfiguriert um eine Gruppenlänge festzulegen, wobei die Gruppenlänge zwei oder mehr Zeichen aufweist;
eine Erfassungseinheit (12), konfiguriert um eine laufende Eingabenummer des aktuellen Eingabezeichens zu erfassen, wenn ein Passwortzeichen eingegeben wird;
eine Bestimmungseinheit (13), konfiguriert um die laufende Eingabenummer mit der Gruppenlänge zu vergleichen und um zu bestimmen, ob die laufende Eingabenummer, die von der Erfassungseinheit (12) erfasst wurde, eins mehr als eine ganzzahliges Vielfaches einer Gruppenlänge ist oder nicht; und
eine Anzeigeeinheit (14), konfiguriert um: das aktuelle Eingabezeichen als Klartextzeichen anzuzeigen und die Eingabezeichen vor dem aktuellen Eingabezeichen als verdeckte Zeichen anzuzeigen, wenn ein Resultat der Bestimmungseinheit (13) Ja ist; und das aktuelle Eingabezeichen als Klartextzeichen anzuzeigen und eine Anzeigeart von anderen Eingabezeichen unverändert zu belassen, wenn das Resultat der Bestimmungseinheit (13) Nein ist;
eine Löscheinheit (15), konfiguriert um: nachdem ein Passwortzeichen gelöscht wurde, eine laufenden Eingabenummer eines letzten Eingabezeichens zu erfassen und zu bestimmen, ob die laufende Eingabenummer des letzten Eingabezeichens ein ganzzahliges Vielfaches der Gruppenlänge ist; falls ja, eine letzte Zeichenkette von Eingabezeichen, von welcher die Nummer gleich der Gruppenlänge ist, auf Klartext zum Anzeigen wiederherzustellen; und falls nein, eine Anzeigeart von anderen Eingabezeichen unverändert zu belassen;
wobei die Anzeigeeinheit (14) weiter konfiguriert ist, um, nachdem alle Passwortzeichen eingegeben wurden und eine Passwortauthentifizierung umgesetzt wurde, alle eingegebenen Passwortzeichen anzuzeigen, wenn die Passwortauthentifizierung fehlgeschlagen ist.

5. Vorrichtung gemäß Anspruch 4, wobei die Anzeigeeinheit (14) konfiguriert ist, alle oder manche der nicht verdeckten Zeichen vor dem aktuellen Eingabezeichen zu aktualisieren, um sie als verdeckte Zeichen anzuzeigen, wenn die Eingabezeichen vor dem aktuellen Eingabezeichen als verdeckte Zeichen angezeigt werden.

6. Vorrichtung gemäß Anspruch 4 oder 5, wobei die Gruppenlänge 3 oder 4 oder 5 Zeichen aufweist.

## Revendications

1. Procédé d'entrée de mode de passe, appliqué à un système de terminal incluant l'entrée d'un mot de passe et comprenant les étapes consistant à :
établir une longueur de groupe, dans lequel la longueur de groupe est de deux caractères ou plus ;
lorsqu'un caractère de mot de passe est entré, acquérir (302) un numéro de série d'entrée du caractère d'entrée courant ;
comparer le numéro de série d'entrée à la longueur de groupe et déterminer (302) si le numéro de série d'entrée est ou non un multiple entier de la longueur de groupe plus un ;
si tel est le cas, afficher (303) le caractère d'entrée courant en tant que caractère de texte en clair, et afficher les caractères d'entrée avant le caractère d'entrée courant en tant que caractères cachés ; et
si tel n'est pas le cas, afficher (304) le caractère d'entrée courant en tant que caractère de texte en clair, et garder un mode d'affichage des autres caractères d'entrée inchangé ;
après qu'un caractère de mot de passe a été effacé, acquérir un numéro de série d'entrée d'un dernier caractère d'entrée, et déterminer si le numéro de série d'entrée du dernier caractère d'entrée est un multiple entier de la longueur de groupe ou non ; si tel est le cas, récupérer une dernière chaîne de caractères d'entrée, dont le nombre est égal à la longueur de groupe, au texte en clair à afficher ; et si tel n'est pas le cas, garder un mode d'affichage des autres caractères d'entrée inchangé ; et
après que tous les caractères de mot de passe ont été entrés, mettre en oeuvre une authentification de mot de passe et afficher tous les caractères de mot de passe entrés lorsque l'authentification de mot de passe échoue.

2. Procédé selon la revendication 1, dans lequel l'étape consistant à afficher les caractères d'entrée avant le caractère d'entrée courant en tant que caractères cachés comprend l'étape consistant à :
rafraîchir la totalité ou une partie des caractères non cachés avant le caractère d'entrée courant pour les afficher en tant que caractères cachés.

3. Procédé selon la revendication 2, dans lequel la longueur de groupe est de 3 ou 4 ou 5 caractères.

4. Dispositif d'entrée de mot de passe, appliqué à un système de terminal incluant l'entrée d'un mot de passe et comprenant :
une unité de paramétrage (11) configurée pour établir une longueur de groupe, dans lequel la longueur de groupe est de deux caractères ou plus ;
une unité d'acquisition (12) configurée pour acquérir, lorsqu'un caractère de mot de passe est entré, un numéro de série d'entrée du caractère d'entrée courant ;
une unité de détermination (13) configurée pour comparer le numéro de série d'entrée à la longueur de groupe et déterminer si le numéro de série d'entrée acquis par l'unité d'acquisition (12) est ou non un multiple entier de la longueur de groupe plus un ; et
une unité d'affichage (14) configurée pour : afficher le caractère d'entrée courant en tant que caractère de texte en clair, et afficher les caractères d'entrée avant le caractère d'entrée courant en tant que caractères cachés lorsque le résultat de l'unité de détermination (13) est Oui ; et afficher le caractère d'entrée courant en tant que caractère de texte en clair, et garder un mode d'affichage des autres caractères d'entrée inchangé lorsque le résultat de l'unité de détermination (13) est Non ;
une unité d'effacement (15) configuré pour : après qu'un caractère de mot de passe a été effacé, acquérir un numéro de série d'entrée du dernier caractère d'entrée, et déterminer si le numéro de série d'entrée du dernier caractère d'entrée est un multiple entier de la longueur de groupe ; si tel est le cas, récupérer une dernière chaîne de caractères d'entrée, dont le nombre est égal à la longueur de groupe, en texte en clair à afficher ; et si tel n'est pas le cas, garder un mode d'affichage des autres caractères d'entrée inchangé ;
dans lequel l'unité d'affichage (14) est en outre configurée pour, après que tous les caractères de mot de passe ont été entrés et qu'une authentification de mot de passe a été mise en oeuvre, afficher tous les caractères de mot de passe entrés lorsque l'authentification de mot de passe échoue.

5. Dispositif selon la revendication 4, dans lequel l'unité d'affichage (14) est configurée pour, lors de l'affichage des caractères d'entrée avant le caractère d'entrée courant en tant que caractères cachés, rafraîchir la totalité ou une partie des caractères non cachés avant le caractère d'entrée courant pour les afficher en tant que caractères cachés.

6. Dispositif selon la revendication 4 ou 5, dans lequel la longueur de groupe est de 3 ou 4 ou 5 caractères.
